# EUROPEAN PATENT APPLICATION

(11) **EP 0 634 583 A1**
(43) Date of publication of application: **18.01.1995**
(21) Application number: 94305079.9
(22) Date of filing: 12.07.1994
(51) Int. Cl.: F16B 39/02

(54) **Means for locking a nut on a bolt**

(30) Priority: 13.07.1993 GB 9314428
(71) Applicant: RPC Design Ltd., Huddersfield, West Yorkshire HD8 9BS (GB)
(72) Inventor: Cartwright, Robert Peter, Huddersfield, West Yorkshire HD8 9BS (GB); Menelaus, Frederick Andrew, Swansea, WestGlamorgan, SA3 4BM (GB)
(74) Representative: Lister, David Anthony, D.A. Lister & Co.

(57) **Abstract**

Nuts have a tendency to work loose from their tightened condition on bolts due to vibration, the effect of which appears to be aggravated by heating. Means for effectively locking a nut (22, 40 or 60) on a bolt (10, 42 or 50) comprise an inwardly tapered axial hole (18 or 54) in the threaded end of the bolt, two diametrical slits (20 or 56) at right angles to each other in the threaded end of the bolt which slits extend only partway along the threaded zone (16 or 52) of the bolt, and a tapered pin (28 or 64) adapted to be driven into the hole to expand the slit portion of the threaded zone of the bolt. When in the tightened condition, the threaded end of the bolt projects from the nut for a distance of several thread pitches so that the pin not only takes up radial clearance between the nut and the bolt, but also enlarges the projecting end of the bolt to a diameter slightly larger than the internal diameter of the nut so that any risk of the nut becoming dangerously slack or lost is obviated. The important use proposed for this invention is for the wheel nuts of lorries.

## Description

This invention relates to means for locking a nut on a bolt. The word "bolt" is herein intended to include any male-threaded member such as a stud or end of a shaft.

The invention is useful in all cases where nuts are liable to become loosened by vibration, and is particularly but by no means exclusively beneficial in the case of wheel nuts for lorries. In spite of being tightened to very high torque values of the order of 500 pound feet (610 newton metres), lorry wheel nuts tend to work loose with potentially disastrous consequences and thus require very frequent checking. It is beleived that axial expansion of the associated bolts due to heating of the wheels caused by long periods of running, especially at speed on motorways, enables the vibrations constantly experienced during running to loosen the nuts more easily. However, similar problems occur in many other applications, for example in the case of drums used in paper-making. Locking means such as split pins and tab washers are well known but are not always reliable in practice.

The object of this invention is to provide means for effectively locking a nut on a bolt.

According to the invention, means for locking a nut having an internally screw-threaded zone on a bolt having an externally screw-threaded zone are characterised by an inwardly tapered axial hole in the threaded end of the bolt, at least one radial slit in said end extending only partway along the threaded zone of the bolt, and a tapered pin adapted to be driven into said hole to expand the slit portion of the threaded zone of the bolt.

Preferably, the pin has a slightly steeper taper than the hole.

When the nut and the bolt are tightened in operative position, the threaded end of said bolt preferably projects from said nut for a distance of several thread pitches.

Preferably, the axial length of the or each slit is substantially equal to the diameter of the bolt plus the distance said bolt projects from the nut.

Preferably, also, the effective length of the pin is substantially the same as the axial length of the or each slit, and the axial length of the hole is greater than the effective length of said pin.

Preferably, the pin has an externally threaded head upon which a supplementary nut can be screwed to withdraw the pin from the hole.

Preferably, also, the threaded end of the bolt has two diametrical slits at right angles to each other.

Preferably, the nut is elongated so as to be significantly longer than the diameter of the bolt.

Preferably, also, the nut is substantialy twice as long as the diameter of the bolt, and said bolt is so dimensioned that when the nut is tightened in operative position thereon said nut engages an unslit portion of the threaded zone of the bolt of substantially the same length as the diameter of said bolt.

Alternatively, the nut is a locknut employed in conjunction with a standard nut of subtantially the same length as the diameter of the bolt.

The bolt is then preferably so dimensioned that when the nuts are tightened in operative position thereon the standard nut is substantially fully engaged upon an unslit portion of the threaded zone of the bolt and the locknut is substantially fully engaged upon the slit portion thereof.

The nut and the bolt may be for use in clamping the wheel of a lorry to its associated hub.

The invention will now be described, by way of example only, with reference to the accompanying drawings of which:-
Figure 1 is a side elevation partly in axial section of a preferred embodiment of the invention;
Figure 2 is a cross-section on the line 2-2 in Figure 1;
Figure 3 is a side elevation of a modification of the embodiment of Figures 1 and 2; and
Figure 4 is an axial section of another embodiment of the invention.

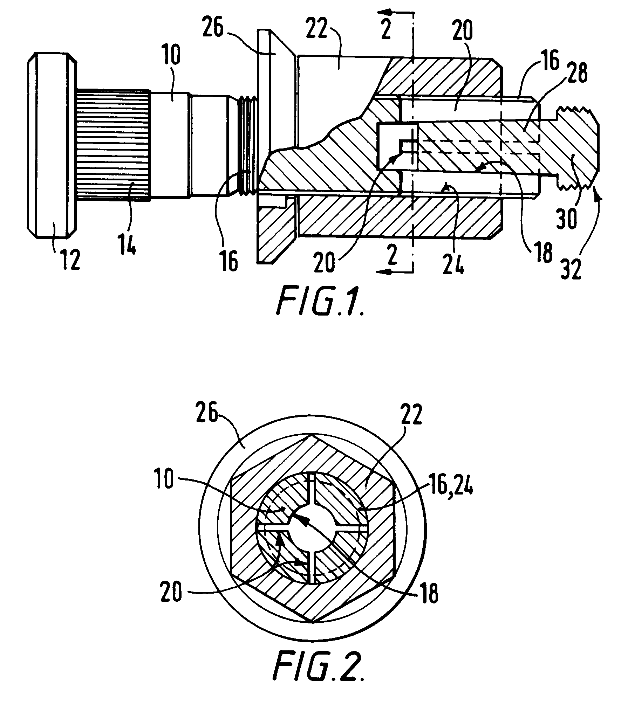

Referring now to to Figures 1 and 2, a lorry wheel is adapted to be secured to an associated hub by a circle of bolts such as 10. Each bolt 10 has a cylindrical head 12 adjacent to which there is a serrated zone 14 adapted to engage in a correspondingly serrated zone of a bore in the hub so as to hold the bolt 10 against rotation. The bolt 10 has an externally screw-threaded zone 16, an axial hole 18 in its threaded end with an inwardly converging taper of, say, 1 in 100, and two diametrical slits 20 at right angles to each other in said end. This configuration of slits is easy to produce and effective in use. An elongated nut 22 having an internally screw-threaded zone 24 is engageable on the threaded zone 16 of the bolt 10, and a captive washer 26 is rotateably secured to the nut 22. A tapered pin 28 which has a slightly steeper taper than the hole 18 is adapted to be driven into said hole with a hammer to expand the slit portion of the threaded zone 16 of the bolt 10. The pin 28 has an externally threaded head 30 upon which a supplementary nut (not shown) can be screwed to co-act with the adjacent end of the bolt 10 in order to withdraw said pin from the hole 18. The head 30 has a large chamfer 32 so that its thread is not damaged when the pin 28 is hammered into operative position. The bolt 10 and the nut 22 are formed of heat treated high tensile steel, and the pin 28 is formed of stainless steel. The hub and the wheel are adapted to be clamped together between the head 12 and the washer 26 by tightening the nut 22 to a torque value of the order of 450 pound feet (610 newton metres), and the pin 28 is then driven into the hole 18. The length of the bolt 10 is such that, when the nut 22 is tightened in operative position thereon, the threaded end of said bolt projects from said nut for a distance of several, say five to six, thread pitches. The axial length of the slits 20 is approximately equal to the diameter of the bolt 10 plus the distance the threaded end of said bolt projects from the nut 22. The effective length of the pin 28. that is to say the length of its tapered portion excluding its head 30, is approximately the same as the axial length of the slits 20, and the axial length of the hole 18 is somewhat greater than the effective length of said pin. The nut 22 is approximately twice as long as the diameter of the bolt 10, the arrangement being such that when said nut and bolt are tightened in operative position the nut 22 engages an unslit portion of the threaded zone 16 of the bolt 10 of approximately the same length as the diameter of said bolt. Thus the arrangement can withstand a tightening torque of at least the same value as a standard nut and bolt of the same diameter, the length of a standard nut being the same as the diameter of its associated bolt.

In operation, the pin 28 expands the slit portion of the threaded zone 16 of the bolt 10 so as to take up radial clearance between the nut 22 and said portion, and in addition to enlarge the projecting end of said bolt to a diameter slightly greater than the internal diameter of said nut. Thus, if the nut 22 does attempt to work loose whilst the lorry is running, the enlarged end of the bolt 10 makes any tendency for said nut to rotate progressively more difficult and ultimately impossible, and effectively obviates any risk of said nut becoming dangerously slack or lost.

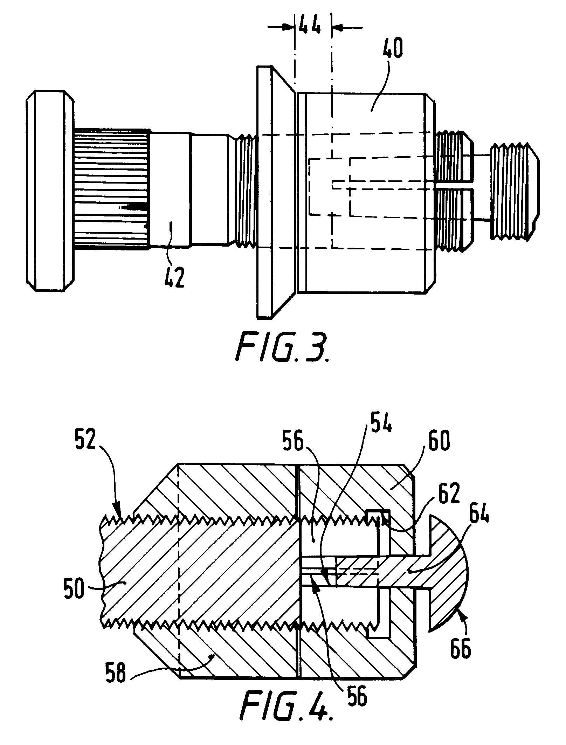

The embodiment of Figures 1 and 2 is ideal for the non-steered wheels of lorries, which usually have their retaining nuts inboard, but due to its elongation the nut 22 might project excessively from the steered wheels of lorries, which usually have their retaining nuts outboard. The embodiment of Figure 3 is a proposal to reduce such projection by employing a nut 40 which is significantly longer than a standard nut but shorter than the nut 22, together with a correspondingly shorter bolt 42. In all other respects the arrangement is identical to that of Figures 1 and 2, but it will be appreciated that when the nut 40 and the bolt 42 are tightened in operative position said nut engages an unslit portion 44 of the threaded zone of said bolt which is shorter than the diameter of said bolt. However, because the nut 40 additionally engages the slit portion of the threaded zone of the bolt 42, said nut can be so dimensioned that the arrangement can still withstand a tightening torque of the same value as a standard nut and bolt of the same diameter.

Referring now to Figure 4, a bolt 50 is substantially identical to the bolt 10 of Figures 1 and 2, and has an externally screw-threaded zone 52, an axial hole 54 in its threaded end which has an inwardly converging taper of,say, one degree, and two diametrical slits 56 at right angles to each other in said end. However, instead of an elongated nut the bolt 50 carries a standard nut 58 and a locknut 60 in the form of a cap nut with a counter-bore 62. A pin 64 which has the same taper as the hole 54 is provided with a domed head 66 which enables it to be withdrawn by means of a cold chisel. The arrangement is such that when tightened in operative position, the standard nut 58 is substantially fully engaged upon an unslit portion of the threaded zone of the bolt 50 and the locknut is substantially fully engaged upon the slit portion of the threaded zone of said bolt. The threaded end of the bolt 50 projects into the counter-bore 62 for a distance of several thread pitches whereby the pin 64 can expand the projecting portion to a diameter slightly larger than the internal diameter of the locknut 60 to prevent significant slackening of said locknut. Thus the embodiment of Figure 4 functions in essentially the same way as that of Figures 1 and 2.

In a modification applicable to all three embodiments hereinbefore described, different numbers of radial slits are employed, for example, a single diametrical slit or three radial slits which are equally spaced apart circumferentially. In another such modification, the threaded end of the bolt does not project from the nut, which is prevented from slackening solely by the expanded slit portion of the threaded zone of the bolt taking up radial clearance between the nut and said portion. In a further such modification, the pin is formed of high density nylon or other suitable plastics material.

## Claims

1. Means for locking a nut (22,40 or 60) having an internally screw-threaded zone (24) on a bolt (10, 42 or 50) having an externally screw-threaded zone (16 or 52) characterised by an inwardly tapered axial hole (18 or 54) in the threaded end of the bolt (10, 42 or 50), at least one radial slit (20 or 56) in said end extending only partway along the threaded zone (16 or 52) of the bolt (10, 42 or 50), and a tapered pin (28 or 64) adapted to be driven into said hole to expand the slit portion of the threaded zone (16 or 52) of the bolt (10, 42 or 50).

2. Means according to claim 1, further characterised in that the pin (28) has a slightly steeper taper than the hole (18).

3. Means according to either of the preceding claims, further characterised in that when the nut (22, 40 or 60) and the bolt (10, 42 or 50) are tightened in operative position, the threaded end of said bolt projects from said nut for a distance of several thread pitches.

4. Means according to claim 3, further characterised in that the axial length of the or each slit (20 or 56) is substantially equal to the diameter of the bolt (10, 42 or 50) plus the distance said bolt projects from the nut (22, 40 or 60).

5. Means according to claim 4, further characterised in that the effective length of the pin (28 or 64) is substantially the same as the axial length of the or each slit (20 or 56), and the axial length of the hole (18 or 54) is greater than the effective length of said pin.

6. Means according to any one of the preceding claims, further characterised in that the pin (28) has an externally threaded head (30) upon which a supplementary nut can be screwed to withdraw the pin (28) from the hole (18).

7. Means according to any one of the preceding claims, further characterised in that the threaded end of the bolt (10, 42 or 50) has two diametrical slits (20 or 56) at right angles to each other.

8. Means according to any one of the preceding claims, further characterised in that the nut (22 or 40) is elongated so as to be significantly longer than the diameter of the bolt (10 or 42).

9. Means according to claim 8, further characterised in that the nut (22) is substantialy twice as long as the diameter of the bolt (10), and said bolt is so dimensioned that when the nut (22) is tightened in operative position thereon said nut engages an unslit portion of the threaded zone (16) of the bolt (10) of substantially the same length as the diameter of said bolt.

10. Means according to any one of claims 1 to 7, further characterised in that the nut is a locknut (60) employed in conjunction with a standard nut (58) of substantially the same length as the diameter of the bolt (50).

11. Means according to claim 10, further characterised in that the bolt is so dimensioned that when the nuts (58 and 60) are tightened in operative position thereon the standard nut (58) is substantially fully engaged upon an unslit portion of the threaded zone (52) of the bolt (50) and the locknut (60) is substantially fully engaged upon the slit portion thereof.

12. Means according to any one of the preceding claims, further characterised in that the nut (22, 40 or 60) and the bolt (10, 42 or 50) are for use in clamping the wheel of a lorry to its associated hub.
